(19) Europäisches Patentamt
European Patent Office
Office européen des brevets

(11) EP 3 989 003 B1

# (12) EUROPEAN PATENT SPECIFICATION

(45) Date of publication and mention of the grant of the patent:
**12.08.2026 Bulletin 2026/33**

(21) Application number: **21200892.4**

(22) Date of filing: **05.10.2021**

(51) International Patent Classification (IPC):
***G03G 9/097*** $^{(2006.01)}$ ***C08F 230/08*** $^{(2006.01)}$

(52) Cooperative Patent Classification (CPC):
(C-Sets available)
**G03G 9/09775; C08F 230/085; C08L 43/04**
(Cont.)

## (54) EXTERNAL ADDITIVE PARTICLE AND TONER

EXTERNE ADDITIVTEILCHEN UND TONER

PARTICULE D'ADDITIF EXTERNE ET TONER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.10.2020 JP 2020177673**
**03.09.2021 JP 2021143747**

(43) Date of publication of application:
**27.04.2022 Bulletin 2022/17**

(73) Proprietor: **CANON KABUSHIKI KAISHA**
**OHTA-KU**
**Tokyo 146-8501 (JP)**

(72) Inventors:
- **SHIRAKAWA, Jun**
**Tokyo, 146-8501 (JP)**
- **HASEGAWA, Waka**
**Tokyo, 146-8501 (JP)**
- **MARUYAMA, Akio**
**Tokyo, 146-8501 (JP)**

(74) Representative: **TBK**
**Bavariaring 4-6**
**80336 München (DE)**

(56) References cited:
**WO-A1-2016/026464** **CN-A- 110 387 018**
**JP-A- H09 197 706** **KR-A- 20130 125 479**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 989 003 B1

(52) Cooperative Patent Classification (CPC): (Cont.)

C-Sets
**C08F 230/085, C08F 212/08**

## Description

### BACKGROUND

The present disclosure relates to a toner that is used in an image forming apparatus of an electrography system.

### Description of the Related Art

In recent years, image forming apparatuses using electrophotography are required to be further increased in speed and to have a longer lifetime. With these demands, toners having superior flowability have been studied in order to obtain stress resistance to withstand rubbing in a development device for a long time and to give high image quality also in high-speed printing.

Japanese Patent Laid-Open No. 8-202071 discloses that, for example, the flowability of a toner is improved by adding a toner additive having an organic polymer skeleton and a polysiloxane skeleton to the toner. WO2016/026464 A1 relates to organic/inorganic hybrid Janus particles and a preparation method and a modification method therefor, and a modified Janus particle and use thereof, wherein the method for preparing the organic/inorganic hybrid Janus particle comprises the following steps: 1) the polymer microspheres are dispersed in water to obtain a seed emulsion; 2) a silane coupling agent emulsion is added to the seed emulsion, and then subjected to a polymerization reaction under mechanical stirring, followed by phase separation to obtain a Janus particle emulsion; the silane coupling agent emulsion comprises a silane coupling agent monomer and a polymerization initiator; 3) the Janus particle emulsion obtained in step 2) is dried by a spray drying method or a freeze drying method to obtain a Janus particle having separated organic and inorganic portions. KR 2013 0125479 A relates to a method for manufacturing a macroporous material which is connected with organic-inorganic hybrid silica particles, the method forms air gaps of porous silica particle and air gaps among particles by connecting organic-inorganic hybrid silica particles by connection legs, thereby largely increasing specific surface area of the macroporous material, so that the macroporous material manufactured by the method can be used in an adsorbent which needs large specific area. JP H09 197706 A relates to a process for producing organic-inorganic composite particles including a hydrolysis stage for hydrolyzing a part or all of at least one kind of the hydrolyzable silicon compounds selected from a group consisting of the compounds. expressed by a specific formula and their derivatives for obtaining hydrolyzate and/or its condensate in the presence of an acid, a polycondensation stage for subjecting the hydrolyzate and/or its condensate to polycondensation in the presence of a base, and a stage for bringing the radical polymerizable groups into radical polymn. reaction.

The present inventors examined the toner described in Japanese Patent Laid-Open No. 8-202071 and, as a result, recognized that it is necessary to further improve the change over time in flowability of the toner when continuously outputs images.

### SUMMARY

At least one aspect of the present disclosure is directed to providing a toner that can have superior flowability and is unlikely to change the flowability over time even when continuous image output is performed, that is, a toner that can have superior flowability retention.

The present disclosure in its first aspect provides an external additive particle for a toner as specified in claims 1 to 9.

The present disclosure in its second aspect provides a toner as specified in claim 10.

The present disclosure in its third aspect provides a manufacturing method for the external additive particle for a toner as specified in claims 11 to 14.

Further features of the present disclosure will become apparent from the following description of exemplary embodiments.

### DESCRIPTION OF THE EMBODIMENTS

The description of "XX or more and YY or less" or "XX to YY" indicating a numerical range means that the numerical range includes the lower limit and the upper limit as the end points, unless otherwise specified.

When numerical ranges are described stepwisely, the upper limit and the lower limit of each numerical range can be arbitrarily combined.

### Background to the present disclosure

As a result of studies by the present inventors, it was revealed that when an external additive particle includes a

polymer including a vinyl polymer moiety and a siloxane moiety and further has a controlled proportion of silicon atoms therein, the flowability of a toner to which the external additive particle is externally added is likely to be increased. On the other hand, it was found that when continuous image output is performed using the toner, the flowability of the toner is unlikely to be maintained in some cases, that is, the flowability retention of the toner is insufficient in some cases. The present inventors presume that this is caused by that the particles of the above-described external additive particle are likely to be detached from the toner during continuous image output in some cases, and the flowability of the toner is decreased by the detachment of the external additive particles from the toner. In addition, the present inventors infer that the external additive particles are likely to detach from the toner because when a load is applied to the toner during continuous image output, the adhesion force only by the affinity between the vinyl polymer moiety in the external additive particle and the toner resin is insufficient in some cases. From the viewpoint of increasing the speed of an image forming apparatus and of obtaining high-quality images, justifiably, a toner is required to have superior flowability retention, and it has been recognized that improvement in this regard is necessary. Based on the above consideration, the present inventors studied on external additive particles allowing to give a toner that can have superior flowability and also can have superior flowability retention. As a result of diligent studies, it was found that when the polymer included in an external additive particle further contains sulfur atoms and sulfur atoms are present in the surface of particles of the external additive particle, a toner to which the external additive particle is externally added is effective as a toner having the above-described characteristics. Each of the components will now be described in detail.

Sulfur atom in surface of external additive particle

The polymer according to the present disclosure includes sulfur atoms, and sulfur atoms are detected when the surface of particles of the external additive particle is subjected to X-ray photoelectron spectroscopy. That is, sulfur atoms are present in the surface region of the external additive particles. The present inventors found that a toner having superior flowability retention is likely to be obtained when the polymer includes sulfur atoms and sulfur atoms are present in the surface region of the external additive particles. Although it is not clear why the flowability retention is improved, the present inventors presume as follows.

Since sulfur, which is a third period element, has a larger main quantum number compared to second period elements such as carbon, the energy difference between atomic orbits is small, and orbital hybridization is likely to occur. Accordingly, the orbit is likely to be warped by an external electrostatic field, that is, it is inferred that the polarizability of a sulfur atom is relatively large, and the polarized site is likely to cause electrostatic interaction with the outside. In addition, it is inferred that even when a sulfur atom is present in a state of being covalently bonded with an atom having high electronegativity, such as an oxygen atom, polarization occurs also in the bond between a sulfur atom and an oxygen atom, and the polarized site is likely to cause electrostatic interaction with the outside. It is inferred that when the polarized site is present in the surface region of external additive particles, the polarized site is likely to strongly interact with a portion where electrostatic interaction is possible on the surface of toner particles, and the external additive particles are unlikely to detach from the surface of the toner particles. The present inventors infer that as a result, a toner that can have superior flowability retention even when continuous image output is performed is likely to be obtained. In addition, since it is inferred that superior flowability retention is likely to be obtained, the sulfur atoms included in the polymer according to the present disclosure may be detected when the surface of particles of the external additive particle is subjected to X-ray photoelectron spectroscopy.

In addition, when the surface of particles of the external additive particle is subjected to X-ray photoelectron spectroscopy, the proportion of the number of sulfur atoms to the sum of the numbers of carbon atoms, oxygen atoms, silicon atoms, and sulfur atoms may be 0.10% to 0.50%, 0.10% to 0.30%, or 0.10% to 0.20%. The present inventors infer that when the proportion of the number of sulfur atoms is within the above-mentioned range, the interaction between the surface of toner particles and the external additive particle is likely to be suitably controlled.

Examples of the state of a sulfur atom at a portion where electrostatic interaction is likely to be caused include a sulfo group ($-SO_3H$), a sulfate group ($-OSO_3H$), and sodium salts and potassium salts thereof. Accordingly, the polymer according to the present disclosure may be a polymer having at least one functional group selected from the group consisting of $-SO_3H$, $-SO_3Na$, $-SO_3K$, $-OSO_3H$, $-OSO_3Na$, and $-OSO_3K$. In addition, the sulfur atom detected by X-ray photoelectron spectroscopy may be a sulfur atom included in at least one functional group selected from the group consisting of $-SO_3H$, $-SO_3Na$, $-SO_3K$, $-OSO_3H$, $-OSO_3Na$, and $-OSO_3K$.

That is, an aspect of the present disclosure is an external additive particle that includes a polymer having at least one functional group selected from the group consisting of $-SO_3H$, $-SO_3Na$, $-SO_3K$, $-OSO_3H$, $-OSO_3Na$, and $-OSO_3K$, wherein the polymer includes a vinyl polymer moiety and a siloxane moiety, the proportion of the number of silicon atoms to the sum of the numbers of carbon atoms, oxygen atoms, and silicon atoms in the external additive particle is 4.0% or more and 25.0% or less, and the functional group may be contained in the surface region of the external additive particles. To contain a sulfo group or a sulfate group in the surface region of the external additive particles means to detect the sulfur atom contained in the functional group when the surface of the external additive particles is subjected to X-ray

photoelectron spectroscopy.

As a method for adding a sulfo group or a salt thereof to the surfaces of the polymer and the external additive according to the present disclosure, for example, a method of using a radical polymerizable sulfonate, such as sodium p-styrenesulfonate, as a material for the polymer described later is mentioned. As a method for adding a sulfate group or a salt thereof to the surfaces of the polymer and the external additive according to the present disclosure, for example, a method using a persulfate, such as potassium peroxodisulfate, as a radical polymerization initiator is mentioned. When potassium peroxodisulfate is used as a radical polymerization initiator in manufacturing of a polymer, $-OSO_3K$ or $-OSO_3H$ is introduced into an end of the polymer, and a sulfur atom is introduced into the produced polymer.

Polymer including vinyl polymer moiety and siloxane moiety

The polymer according to the present disclosure includes a vinyl polymer moiety and a siloxane moiety.

The vinyl polymer moiety in the polymer is an organic polymer moiety made of a polymerized vinyl polymerizable monomer. It is inferred that the affinity to the resin constituting toner particles is likely to increase by containing the vinyl polymer moiety in the polymer included in the external additive particle, and the external additive particles are unlikely to detach from the toner particles.

In addition, the polymer including the external additive particle includes not only the vinyl polymer moiety but also a siloxane moiety. Consequently, the external additive particle including the polymer according to the present disclosure is likely to have a sufficient mechanical strength and is unlikely to be plastic deformed. Accordingly, the toner to which the external additive particle is externally added can have superior flowability.

As an aspect of the polymer according to the present disclosure, vinyl polymer chains may be cross-linked by a siloxane bond in the polymer. It is inferred that the mechanical strength of the external additive particle is likely to be increased by including the polymer in the external additive particle, and plastic deformation is unlikely to occur. Similarly, as an aspect of the polymer according to the present disclosure, the polymer may have a structure in which vinyl polymer molecular chains are bonded through a siloxane bond. In addition, the polymer according to the present disclosure may constitute the external additive particle.

A particle having only a polysiloxane skeleton, for example, a silica particle, has a high mechanical strength but has a low affinity to the resin constituting toner particles, and the flowability of the toner is likely to decrease when continuous image output is performed.

A particle having only an organic polymer skeleton, for example, a polymethyl methacrylate particle, has a low mechanical strength. When the particle is used as the external additive particle, it is inferred that plastic deformation and breakage are likely to occur by mechanical shock in, for example, a developing unit. As a result, the toner is likely to adhere to various members, resulting in difficulty of obtaining a toner having superior flowability.

As a method for obtaining the polymer according to the present disclosure, a method of performing vinyl polymerization using a vinyl polymerizable monomer containing s silicon atom bonded to a hydrolyzable group, such as a methoxy group, and then performing hydrolysis and polycondensation reaction of the hydrolyzable group to form a siloxane bond is mentioned. In this method, a vinyl polymer chain is formed by performing vinyl polymerization in advance, and a siloxane bond is then formed in the polymer or between the polymers by the subsequent hydrolysis and polycondensation. Accordingly, a polymer in which vinyl polymer chains are cross-linked by a siloxane bond is obtained.

Proportion of the number of silicon atoms to the sum of numbers of carbon atoms, oxygen atoms, and silicon atoms

The proportion of the number of silicon atoms to the sum of the numbers of carbon atoms, oxygen atoms, and silicon atoms in the external additive particle is 4.0% to 25.0%.

The present inventors infer that the proportion of the number of silicon atoms to the sum of the numbers of carbon atoms, oxygen atoms, and silicon atoms is an indicator of siloxane moiety present in an external additive particle.

It is inferred that when the above-mentioned proportion is 4.0% or more, a sufficient amount of siloxane moiety is present in the external additive particle, and plastic deformation of particles of the external additive particle is unlikely to occur. Accordingly, a toner having superior flowability is likely to be obtained. In addition, since it is inferred that when the above-mentioned proportion is 25.0% or less, the amount of siloxane moiety in the external additive particle is unlikely to become excessive, and the external additive particles are unlikely to detach from the toner particles, a toner having superior flowability is likely to be obtained. Accordingly, the proportion is 25.0% or less and may be 20.0% or less, 15.0% or less, 10.0% or less, or 8.0% or less. That is, the proportion may be 4.0% to 10.0% or 4.0% to 8.0%.

In addition, since a toner having superior flowability is likely to be obtained, the ratio of the number of carbon atoms in the external additive particle to the number of silicon atoms in the external additive particle may be 6.5 or more, 7.5 or more, or 13.5 or more. The upper limit is not particularly limited, but the viewpoint of the flowability of the toner, the ratio may be 20.0 or less or 17.0 or less.

The above-mentioned ratio of the numbers of atoms can be controlled by controlling the type and the amount of a

monomer unit containing a silicon atom and controlling the type and the amount of a monomer unit not containing a silicon atom when the polymer included in the external additive particle is manufactured.

Monomer unit in polymer

Because the ratios of carbon atoms, oxygen atoms, and silicon atoms are likely to satisfy the above-mentioned ranges and the effects of the present disclosure are likely to be obtained, the polymer may contain a monomer unit represented by the following Formula (1):

$$-\left[ CH_2 - \underset{\underset{\underset{\underset{\underset{SiO_{3/2}}{|}}{R^1}}{|}}{\underset{O}{|}}}{\underset{C=O}{|}}}{\overset{R'}{\overset{|}{C}}} \right]- \quad \cdots \quad (1)$$

In Formula (1), $R^1$ is an alkylene group having 1 to 10 carbon atoms, and R' is a hydrogen atom or a methyl group. In the present disclosure, $SiO_{N/2}$ is regarded as a unit in a state in which N valences of the four valences of a silicon atom bond to oxygen atoms, and every of the N oxygen atoms bond to Si, that is, regarded as a unit in a state in which N oxygen atoms each form a siloxane bond (Si-O-Si). The polymer according to the present disclosure may include, as one aspect of including a sulfur atom, a monomer unit represented by the following Formula (S).

CH2-CH
(S)
RS1
RS4
RS2
RS3
SO3X

In Formula (S), $R^{S1}$ to $R^{S4}$ are each independently a hydrogen atom or a methyl group, X is a hydrogen atom or an alkali metal atom. Since the polymer includes the above-mentioned monomer unit, the polymer according to the present disclosure includes a sulfur atom, and even after continuous image output, sulfur atoms are likely to be present in the surface of the external additive particles. Consequently, it is possible to increase the flowability retention of a toner to which

the external additive particle containing the polymer is externally added. Examples of the alkali metal atom in the above Formula (S) include Na and K. The position of $-SO_3X$ in the above Formula (S) may be the para position with respect to $-CH_2-CH-$ in the above Formula (S). $R^{S1}$ to $R^{S4}$ may be hydrogen atoms.

D50 of external additive particle

In order to obtain an appropriate volume average particle diameter as the particles of the external additive particle, the 50% particle diameter based on the volume distribution, D50, of the external additive particles may be 50 nm to 200 nm.

Method for manufacturing external additive particle

In manufacturing of the external additive particle, a radical polymerization reaction is performed using a compound including both a radical polymerizable group and a hydrolyzable group that forms a siloxane bond by hydrolysis and polycondensation in the molecule, and a hydrolysis reaction and a polycondensation reaction may be then performed. It is inferred that the main skeleton of the polymer included in the external additive particle becomes a vinyl polymer moiety by performing the radical polymerization reaction in advance, and the affinity to the resin constituting a toner is likely to be increased. The flowability of the toner to which the external additive particle is externally added is likely to be increased.

In addition, sulfur atoms may be contained in the surface regions of the polymer and the toner particles according to the present disclosure by adding a radical polymerizable sulfonate as a monomer material for the radical polymerization reaction and/or using a persulfate as a radical polymerization initiator.

That is, as an aspect of the present disclosure, a method for manufacturing an external additive particle including a polymer may include a step (i-1) and a step (ii) or include a step (i-2) and a step (ii):

(i-1) a step of obtaining a polymerized compound having a hydrolyzable group by performing a radical polymerization reaction of monomer material containing a radical polymerizable sulfonate and a compound represented by a following Formula (2),
(i-2) a step of obtaining a polymerized compound having a hydrolyzable group by performing a radical polymerization reaction of monomer material containing a compound represented by a following Formula (2), with persulfate as a radical polymerization initiator,

Formula (2): $R^5{}_mSiX_{4-m}$

wherein,
X is a hydrolyzable group,
m is an integer of 1 to 3,
when m is 1, $R^5$ is a radical polymerizable group having 1 to 20 carbon atoms, and when m is 2 or 3, at least one of $R^5$s is a radical polymerizable group having 1 to 20 carbon atoms and all the others of $R^5$s which are not radical polymerizable group are each independently an alkyl group having 1 to 20 carbon atoms;
(ii) a step of obtaining the polymer by performing a hydrolysis reaction and a polycondensation reaction of the hydrolyzable group in the polymerized compound obtained in the step (i-1) or the step (i-2).

The number of carbon atoms of $R^5$ may be 1 to 20, 1 to 15, or 1 to 10.

An external additive particle including a polymer in which vinyl polymers are cross-linked by a siloxane bond is obtained by performing the radical polymerization reaction and then performing a hydrolysis reaction and a polycondensation reaction of the hydrolyzable group in the polymerized compound obtained in the step (i-1) or the step (i-2). A polymer having a proportion of the number of silicon atoms controlled as described above is likely to be obtained by performing hydrolysis and polycondensation after the formation of a molecular chain of the vinyl polymer. It is inferred that sulfur atoms are likely to be contained in the surface of the particles of the external additive particle by performing the hydrolysis reaction and the polycondensation reaction later.

The hydrolyzable group in the present disclosure means a functional group bonding with silicon atom that is converted into a hydroxy group bonding with silicon atom after hydrolysis of the above-mentioned compound or means a hydroxy group bonding with silicon atom. The hydrolyzable group in the present disclosure is, for example, a monovalent group selected from the group consisting of a hydroxy group, a fluoro group, a chloro group, a bromo group, an iodo group, an alkoxy group, and an acyloxy group. Examples of the alkoxy group include a methoxy group, an ethoxy group, and a propoxy group, and examples of the acyloxy group include an acetoxy group. Preferably, the hydrolyzable group in the present disclosure is a monovalent group selected from the group consisting of a methoxy group, an ethoxy group, a propoxy group, and an acetoxy group, and more preferably the group consisting of a methoxy group and an ethoxy group.

These hydrolyzable groups are easily hydrolyzed by water and easily cause the subsequent polycondensation reaction.

The radical polymerizable group in the present disclosure means a substituent having a radical reactive double bond in the structure, such as a vinyl group, an acryloxyalkyl group or a methacryloxyalkyl group. Preferably, the radical polymerizable group in the present disclosure is an acryloxyalkyl group or a methacryloxyalkyl group.

The radical polymerizable sulfonate is an organic sulfonate compound including the above-mentioned radical polymerizable group in the compound.

Examples of the radical polymerizable sulfonate include sodium p-styrenesulfonate, potassium p-styrenesulfonate, lithium p-styrenesulfonate, magnesium p-styrenesulfonate, calcium p-styrenesulfonate, ammonium p-styrenesulfonate, sodium vinylsulfonate, potassium vinylsulfonate, lithium vinylsulfonate, magnesium vinylsulfonate, calcium vinylsulfonate, and ammonium vinylsulfonate. These radical polymerizable sulfonates may be used alone or in combination of two or more.

Examples of the persulfate that is used as a radical polymerization initiator include potassium persulfate, sodium persulfate, and ammonium persulfate. These persulfates may be used alone or in combination of two or more.

From the viewpoint of the flowability retention of a toner, the amount of the radical polymerizable sulfonate may be 0.4 to 5.0 mass%, or 0.7 to 1.0 mass%, based on the total mass of the monomer material.

In addition, from the viewpoint of the flowability of a toner, the amount of the compound represented by the above Formula (2) may be 50 to 80 mass%, or 60 to 75 mass%, based on the total mass of the monomer material.

Radical polymerization reaction (step (i-1) or step (i-2))

The method of the radical polymerization reaction (step (i-1) or step (i-2)) may be an emulsion polymerization method. The emulsion polymerization method is a polymerization method by mixing a medium, such as water, a monomer that is difficult to be dissolved in the medium, and an emulsifier (surfactant) or an ionic comonomer and adding a polymerization initiator that can be dissolved in the medium to the mixture. The emulsion polymerization method may be a soap-free emulsion polymerization method, which performs polymerization without using a surfactant. The present inventors infer that in the soap-free emulsion polymerization method, since no surfactant remains on the surface of the external additive particles, the affinity between toner particles and the external additive particles is easily controlled.

Examples of the compound represented by the above Formula (2), i.e., the monomer including both a radical polymerizable group and a hydrolyzable group include organo trialkoxysilane compounds, such as γ-methacryloxypropyltrimethoxysilane, γ-methacryloxypropyltriethoxysilane, γ-acryloxypropyltrimethoxysilane, γ-acryloxypropyltriethoxysilane, γ-methacryloxypropyltriacetoxysilane, vinyltrimethoxysilane, vinyltriethoxysilane, vinyltriacetoxysilane, 1-hexenyltrimethoxysilane, and 1-octenyltrimethoxysilane; diorgano dialkoxysilane compounds, such as organo triacetoxysilane, bis(γ-acryloxypropyl)dimethoxysilane, bis(γ-methacryloxypropyl)dimethoxysilane, γ-methacryloxypropylethyldimethoxysilane, γ-methacryloxypropylethyldiethoxysilane, γ-acryloxypropylethyldimethoxysilane, and γ-acryloxypropylethyldiethoxysilane; and triorgano alkoxysilane compounds, such as tris(γ-acryloxypropyl)methoxysilane, tris(γ-acryloxypropyl)ethoxysilane, tris(γ-methacryloxypropyl)methoxysilane, tris(γ-methacryloxypropyl)ethoxysilane, bis(γ-acryloxypropyl)vinylmethoxysilane, bis(γ-methacryloxypropyl)vinylmethoxysilane, γ-acryloxypropyldiethylmethoxysilane, γ-acryloxypropyldiethylethoxysilane, γ-methacryloxypropyldiethylmethoxysilane, and γ-methacryloxypropyldiethylethoxysilane.

Among the monomers above, γ-methacryloxypropyltrimethoxysilane, γ-methacryloxypropyltriethoxysilane, γ-acryloxypropyltrimethoxysilane, γ-acryloxypropyltriethoxysilane, γ-methacryloxypropyltriacetoxysilane, vinyltrimethoxysilane, vinyltriethoxysilane, or vinyltriacetoxysilane may be used.

The compound represented by the above Formula (2), i.e., the monomer including both a radical polymerizable group and a hydrolyzable group may be a monomer represented by the following Formula (3).

In Formula (3), $R^1$ is an alkylene group having 1 to 10 carbon atoms, $R^2$, $R^3$, and $R^4$ are each independently hydrogen, a methyl group, or an ethyl group, and R' is hydrogen or a methyl group.

The radical polymerization initiator that is used in radical polymerization is not particularly limited and may be at least one compound selected from the group consisting of a persulfate, an azo compound, and a peroxide or may be a persulfate. The amount of the radical polymerization initiator is not particularly limited and may be 0.1 to 10 mass%, or 0.3 to 5.0 mass%, based on the total mass of the monomer material. When the amount of the radical polymerization initiator is within the above-mentioned range, the radical polymerization sufficiently proceeds, and the heat generation amount of the reaction system is unlikely to become excessive.

The temperature for radical polymerization can be appropriately selected based on the type and the amount of the radical polymerization initiator to be used and may be within a range of 30°C to 100°C or 50°C to 80°C.

In the radical polymerization step (step (i-1) or step (i-2)), the radical polymerization reaction may be under a condition of $6.0 \leq pH \leq 8.0$ or $6.5 \leq pH \leq 7.5$. It is inferred that when the pH of the reaction system is within the above-mentioned range, hydrolysis and polycondensation reaction of the hydrolyzable group are unlikely to occur during the progress of the radical polymerization reaction. It is inferred that a sulfur atom having higher polarity is likely to be contained in the surface of the external additive particles by performing hydrolysis and polycondensation reaction after the radical polymerization. Accordingly, the radical polymerization reaction may be performed in a buffer solution. The buffer solution is not particularly limited and may be a buffer solution having a pH near neutral, such as a phosphate buffer solution and an MES buffer solution.

In the radical polymerization, not only a monomer including both a radical polymerizable group and a hydrolyzable group but also another monomer having a radical polymerizable group may be used.

Examples of the additional monomer include unsaturated carboxylic acids, such as acrylic acid and methacrylic acid; unsaturated carboxylic acid esters, such as acrylic acid esters, methacrylic acid esters, crotonic acid esters, itaconic acid esters, maleic acid esters, and fumaric acid esters; acrylamides; methacrylamides; and vinyl compounds, for example, aromatic vinyl compounds, such as styrene, $\alpha$-styrene, and divinylbenzene; vinyl esters, such as vinyl acetate; and halogenated vinyl compounds, such as vinyl chloride. These monomers may be used alone or in combination of two or more. Alternatively, a monomer containing two or more radical polymerizable groups, such as divinylbenzene, trimethylolpropane trimethacrylate, and ethylene glycol dimethacrylate, may be used.

Hydrolysis reaction and polycondensation reaction (step (ii))

The methods for the hydrolysis reaction and the polycondensation reaction are not particularly limited, and the hydrolysis reaction may be performed under acidic conditions, and the polycondensation reaction may be performed under basic conditions. Accordingly, the step (ii) may include a step A of performing a reaction under the condition of a pH of $2.0 \leq pH \leq 4.0$ and a step B of performing a reaction under the condition of a pH of $10.0 \leq pH \leq 12.0$ after the step A.

Specifically, a catalyst, such as an acid or a base, is added to an emulsion including particles obtained by radical polymerization, and directly, hydrolysis and polycondensation may be performed to obtain particles of a polycondensation product. That is, the condensation step may be a step of obtaining particles of a condensation product by performing a hydrolysis reaction and a polycondensation reaction of the hydrolyzable group X in Formula (2) after the radical polymerization step. In addition, the particles obtained by radical polymerization may be isolated from the emulsion by a procedure such as filtration, centrifugation, or concentration under reduced pressure and then may be subjected to hydrolysis and polycondensation by addition of a catalyst.

In the hydrolysis and the polycondensation reaction after the formation of particles by a radical polymerization reaction, a catalyst, such as acetic acid, hydrochloric acid, ammonia, urea, alkanolamine, tetraalkylammonium hydroxide, an alkali metal hydroxide, and an alkali earth metal hydroxide, may be used.

From the viewpoint of further promoting polycondensation, examples of the catalyst include organic titanium compounds, such as titanium tetraisopropoxide, titanium tetrabutoxide, and diisopropoxy-bis(acetylacetonate)titanate; organic aluminum compounds, such as aluminum triisopropoxide, aluminum tri-sec-butoxide, aluminum tris-acetylacetonate, and aluminum isopropoxide-bisacetylacetonate; organic zirconium compounds, such as zirconium tetrabutoxide and zirconium tetrakis(acetylacetonate); organic tin compounds, such as dibutyl tin diacetate, dibutyl tin diethylhexanoate, and dibutyl tin dimaleate; and acidic phosphoric acid esters. These catalysts may be used alone or in combination of two or more. In particular, at least one selected from the group consisting of the organic tin compounds and the acidic phosphoric acid esters may be used.

The solvent that is used in manufacturing of the external additive particle may contain an organic solvent other than water and a catalyst. Examples of the organic solvent include alcohols, such as methanol, ethanol, isopropanol, n-butanol, isobutanol, sec-butanol, t-butanol, pentanol, ethylene glycol, propylene glycol, and 1,4-butanediol; ketones, such as acetone and methyl ethyl ketone; esters, such as ethyl acetate; (cyclo)paraffines, such as isooctane and cyclohexane; ethers, such as dioxane and diethyl ether; and aromatic hydrocarbons, such as benzene and toluene. Two or more thereof may be used as a mixture.

The hydrolysis reaction and the polycondensation reaction can be performed by, for example, appropriately adding a catalyst to an emulsion produced by a radical polymerization reaction and stirring the emulsion at 0°C to 100°C, for example, within a range of 0°C to 70°C, for 3 to 24 hours.

Post-treatment

As described above, the particles obtained by performing radical polymerization and then hydrolysis and polycondensation are isolated from a slurry by a method, such as filtration, centrifugation, concentration under reduced pressure, spray drying, and instantaneous vacuum drying, and drying treatment may be then performed at 30°C to 100°C, 30°C to 80°C, or 50°C to 70°C. An external additive particle having appropriate charging characteristics and an appropriate mechanical strength is likely to be obtained by performing the drying treatment.

From the viewpoint of chargeability of a toner, the external additive particle may be surface-treated using a surface preparation agent for treating the hydroxy groups remaining on the surface of particles of the external additive particle obtained by the above-described manufacturing and controlling the negative charge amount. Examples of the surface preparation agent include silicon compounds, such as organo alkoxysilane and hexamethyldisilazane; titanium compounds, such as tetrabutyl titanate; and hydrolysis or condensation products thereof.

The method for the surface treatment is not particularly limited as long as the surface of the external additive particles can be coated with the above-mentioned surface preparation agent. For example, the surface treatment can be performed by putting the external additive particles and then a surface preparation agent in an appropriate container and bringing them into contact with each other by stirring them at a temperature of room temperature (25°C ± 5°C) to about 100°C for 3 to 24 hours for mixing. In this case, the surface treatment can be further uniformly performed by dissolving the surface preparation agent in a solvent, such as methanol, and performing mixing and contacting while gradually dropping the solution of the surface preparation agent. Incidentally, the amount of the surface preparation agent present on the surface of external additive particles can be adjusted by appropriately selecting the type of the surface preparation agent, the time of the surface treatment, and the particle diameter of the external additive particles, etc. The thus surface-treated product is washed with, for example, alcohol as needed to obtain an external additive from which unwanted substances are removed.

Toner

In addition, the external additive particle according to the present disclosure may be contained in the surface of the toner particles. That is, as an aspect of the present disclosure, a toner may contain toner particles and an external additive on the surface of the toner particles, where the external additive may be the external additive particle according to the present disclosure.

The toner particles may contain a binder resin. Examples of the binder resin include a polyester resin, a vinyl resin, an epoxy resin, and a polyurethane resin.

The binder resin may have a glass transition point (Tg) of 45°C to 70°C from the viewpoint of storage stability.

Method for manufacturing toner particle

The method for manufacturing the toner particles according to the present disclosure is not particularly limited, and, for example, a pulverization process and a polymerization process, such as an emulsion polymerization method, a suspension polymerization method, and a dissolution suspension method, can be used.

The pulverization process will be described. In the pulverization process, first, a binder resin, a coloring agent, wax, a charge control agent, etc. constituting toner particles are sufficiently mixed with a mixer, such as a Henschel mixer and a ball mill. Then, the resulting mixture is melted and kneaded using a thermal kneader, such as a twin-screw kneading extruder, a heat roller, a kneader, and an extruder, cooled and solidified, and then subjected to pulverization and classification. Consequently, toner particles according to the present disclosure are obtained.

Examples of the kneader include KRC kneader (manufactured by Kurimoto, Ltd.), Buss Co-Kneader (manufactured by Buss AG), TEM Type Extruder (manufactured by Toshiba Machine, Co. Ltd.), TEX twin-screw kneader (manufactured by The Japan Steel Works, Ltd.), PCM kneader (manufactured by Ikegai Corp.), a triple roll mill, a mixing roll mill, and a kneader (manufactured by Inoue Mfg., Inc.), Kneadex (manufactured by Mitsui Kozan Co., Ltd.), MS type pressurization kneader and Kneader-Ruder (manufactured by Nihon Spindle Manufacturing Co., Ltd.), and Banbury mixer (manufactured by Kobe Steel, Ltd.).

Examples of the pulverizer include Counter Jet Mill, Micron Jet, and Inomizer (manufactured by Hosokawa Micron Corporation), IDS-type mill and PJM Jet pulverizer (manufactured by Nippon Pneumatic Mfg. Co., Ltd.), Cross Jet Mill (manufactured by Kurimoto, Ltd.), Ulmax (manufacturing by Nisso Engineering Co., Ltd.), SK Jet-O-Mill (manufactured by Seishin Enterprise Co., Ltd.), Kryptron (manufactured by Kawasaki Heavy Industries, Ltd.), Turbo-mill (manufactured by Turbo Kogyo Co., Ltd.), and Super Rotor (manufactured by Nisshin Engineering Inc.).

Examples of the classifier include Classiel, Micron Classifier, and Spedic Classifier (manufactured by Seishin Enterprise Co., Ltd.), Turbo Classifier (manufactured by Nisshin Engineering Inc.), Micron Separator, Turboplex (ATP), and TSP Separator (manufactured by Hosokawa Micron Corporation), Elbow Jet (manufactured by Nittetsu Mining Co., Ltd.), Disperse Separator (manufactured by Nippon Pneumatic Mfg. Co., Ltd.), and YM Microcut (manufactured by Yasukawa Shoji Co., Ltd.).

The suspension polymerization method will be described. In the suspension polymerization method, first, a polymerizable monomer that can generate a binder resin and various additives as needed are mixed, and the materials are dissolved or dispersed with a disperser to prepare a polymerizable monomer composition. Examples of the additive include a coloring agent, wax, a charge control agent, a polymerization initiator, and a chain transfer agent. Examples of the disperser include a homogenizer, a ball mill, a colloid mill, and an ultrasonic disperser. Then, the polymerizable monomer composition is added to an aqueous medium containing water-insoluble inorganic fine particles, and droplets of the polymerizable monomer composition are prepared using a high-speed disperser, such as a high-speed stirrer and an ultrasonic disperser (droplet formation step). Then, the polymerizable monomer in the droplets is polymerized to obtain toner particles (polymerization step). The polymerization initiator may be mixed when preparing the polymerizable monomer composition or may be mixed in the polymerizable monomer composition immediately before the formation of droplets in an aqueous medium. The polymerization initiator may be added in a state of being dissolved in a polymerizable monomer or another solvent as needed during formation of droplets or after completion of droplet formation, i.e., immediately before the start of a polymerization reaction. After preparation of a binder resin by polymerization of a polymerizable monomer, desolvation treatment may be performed as needed to give a dispersion of toner particles.

Method for externally adding external additive to toner particle

The toner according to the present disclosure can be obtained by mixing toner particles and an external additive with a mixer, such as a Henschel mixer.

Examples of the mixer include Henschel mixer (manufactured by Mitsui Kozan Co., Ltd.), Super Mixer (manufactured by Kawata Mfg. Co., Ltd.), Ribocone (manufactured by Okawara Corporation), Nauta Mixier, Turbulizer, and Cyclomix (manufactured by Hosokawa Micron Corporation), Spiral Pin Mixer (manufactured by Pacific Machinery &

Engineering Co., Ltd.), and Loedige Mixer (manufactured by Matsubo Corporation).

The toner particles contain the external additive particle on the surfaces and also may contain another external additive. Examples of the optional external additive include fluorine-based resin powders, such as vinylidene fluoride fine powder and polytetrafluoroethylene fine powder; fine powder silica, such as wet-processed silica and dry-processed silica; fine powder titanium oxide, fine powder alumina, and treated silica in which fine powder titanium oxide or fine powder alumina is surface-treated with a silane compound, a titanium coupling agent, or silicone oil; oxides, such as zinc oxide and tin oxide; complex oxides, such as strontium titanate, barium titanate, calcium titanate, strontium zirconate, and calcium zirconate; and carbonate compounds, such as calcium carbonate and magnesium carbonate.

Various additives of toner

The toner may contain one or more additives selected from, for example, a coloring agent, wax, a magnetic material, and a charge control agent as needed. Various additives that are used in toners will be specifically described.

Magnetic material

The toner may be used as a magnetic toner by containing magnetic particles. In this case, the magnetic particles may have a function as a coloring agent.

Examples of the magnetic particles contained in the magnetic toner include iron oxides, such as magnetite, hematite, and ferrite; and metals, such as iron, cobalt, and nickel, and alloys of these metals with a metal, such as aluminum, cobalt, copper, lead, magnesium, tin, zinc, antimony, bismuth, calcium, manganese, titanium, tungsten, and vanadium, and mixtures thereof.

The magnetic particles may have an average particle diameter of 2 $\mu$m or less, or 0.05 $\mu$m or more and 0.5 $\mu$m or less. The content of the magnetic particles may be 20 parts by mass or more and 200 parts by mass or less, or 40 parts by mass or more and 150 parts by mass or less, based on 100 parts by mass of the binder resin.

Coloring agent

Examples of the coloring agent include the followings.

Examples of black coloring agents include carbon black, graft carbon, and a coloring agent toned to black using the following yellow, magenta, and cyan coloring agents.

Examples of yellow coloring agents include compounds represented by condensed azo compound, an isoindolinone compound, an anthraquinone compound, an azo metal complex, a methine compound, and an allylamide compound.

Examples of magenta coloring agents include a condensed azo compound, a diketopyrrolopyrrole compound, anthraquinone, a quinacridone compound, a basic dye lake compound, a naphthol compound, a benzimidazolone compound, a thioindigo compound, and a perylene compound. Examples of cyan coloring agents include copper phthalocyanine compound and derivatives thereof, an anthraquinone compound, and a basic dye lake compound.

The coloring agents may be used alone or as a mixture or in a state of solid solution. The coloring agent is selected based on the hue angle, color saturation, lightness value, weather resistance, OHP transparency, and dispersibility in a toner.

The content of the coloring agent may be 1 part by mass or more and 20 parts by mass or less based on 100 parts by mass of the binder resin.

Wax

Examples of the wax include aliphatic hydrocarbon-based wax, such as low-molecular-weight polyethylene, low-molecular-weight polypropylene, a polyolefin copolymer, polyolefin wax, microcrystalline wax, paraffine wax, and Fischer-Tropsch wax; oxides of aliphatic hydrocarbon-based wax, such as oxidized polyethylene wax; block copolymers, such as aliphatic hydrocarbon-based wax, and oxides thereof; ester wax of which the main component is fatty acid ester, such as carnauba wax; and wax obtained by partially or wholly deoxidizing fatty acid esters, such as deoxidized carnauba wax.

Charge control agent

The charge control agent is not particularly limited and may be an organic metal complex or a chelate compound. Examples thereof include a monoazo metal complex, an acetylacetone metal complex, a metal complex or a metal salt of an aromatic hydroxycarboxylic acid or an aromatic dicarboxylic acid.

Specific usable examples include Spilon Black TRH, T-77, and T-95 (Hodogaya Chemical Co., Ltd.) and

BONTRON (registered trademark) S-34, S-44, S-54, E-84, E-88, and E-89 (Orient Chemical Industries Co., Ltd.). The charge control resin can also be used together with the above-mentioned charge control agent.

Developer

The toner can also be used as a one-component developer but may be used as a two-component developer by mixing with a magnetic carrier in order to improve the dot reproducibility and to supply long-term stable images.
As the magnetic carrier, for example, a metal, such as surface-oxidized iron, surface-unoxidized iron, nickel, cobalt, manganese, chromium, and rare earth, and alloys or oxides thereof may be used.
The surface of the magnetic carrier may contain or be coated with a styrene-based resin, an acrylic resin, a silicone-based resin, a fluorine-based resin, or polyester.

Various measuring methods and others

Various measuring methods and others will now be described.

Method for measuring ratio of number of sulfur atoms to sum of numbers of carbon atoms, oxygen atoms, silicon atoms, and sulfur atoms in surface of external additive particle

The ratio of the number of sulfur atoms present in the surface region of external additive particles is measure by X-ray photoelectron spectroscopy. The apparatus and measurement conditions are shown below.
Apparatus used: PHI Quantera SXM, manufactured by ULVAC-PHI, Inc.
X-ray photoelectron spectrometer measurement conditions: X-ray source: Al K$\alpha$ (1486.6 eV) 200 $\mu$m diameter, pass energy: 140 eV, electrification neutralization: combined use of electron flood gun and Ar ion flood gun, Number of sweep: 20 times for C, 20 times for O, 20 times for Si, and 100 times for S.
The atomic concentrations (atom%) of carbon atoms, oxygen atoms, silicon atoms, and sulfur atoms present in the surface region of external additive particles are calculated from the peak intensity of each of the measured elements using a relative sensitivity factor provided by ULVAC-PHI, Inc. Based on this result, the ratio of the number of sulfur atoms to the sum of the numbers of the carbon atoms, oxygen atoms, silicon atoms, and sulfur atoms in the surface of the external additive particles is calculated.

Method for measuring concentration (atom%) of carbon atom, oxygen atom, and silicon atom in external additive particle

Carbon atom and oxygen atom: The concentrations (atom%) of carbon atoms and oxygen atoms present in external additive particles are calculated using elemental analysis by combustion. The apparatus for elemental analysis is shown below.
Apparatus used: 2400II fully automatic elemental analyzer, manufactured by PerkinElmer Co., Ltd.
Silicon atom: The concentration (atom%) of silicon atoms present in external additive particles is measured by elemental analysis by ICP-AES through alkali fusion. The apparatus for ICP-AES is shown below.
Apparatus used: ICPS-8100, manufactured by Shimadzu Corporation.
The resulting compositional ratios are each converted into mol%. Using the converted values, the ratio of the number of silicon atoms to the sum of the numbers of carbon atoms, oxygen atoms, and silicon atoms in the external additive particles is calculated. Similarly, the ratio of the number of carbon atoms to the number of silicon atoms in the external additive particles is calculated.

Verification of vinyl polymer moiety and siloxane moiety in polymer

It is possible to verify whether a polymer includes a vinyl polymer moiety or not by subjecting the polymer to thermal decomposition GC/MS and identifying the monomer type generated by thermal decomposition. In the present disclosure, as the apparatus of the thermal decomposition GC/MS for verifying whether a polymer includes a vinyl polymer moiety, the following apparatuses are used in combination.

Agilent 7890A and 5975C (Agilent Technologies, Inc.)
PY-2020iD (Frontier Laboratories Ltd.)

In addition, solid NMR analysis and IR analysis can also be used in combination with thermal decomposition GC/MS. In addition, it is judged that a polymer includes a siloxane moiety when at least any of $SiO_{4/2}$(Q) unit, $SiO_{3/2}$(T) unit, $SiO_{2/2}$(D)

unit, and $SiO_{1/2}$(M) unit is observed in $^{29}$Si-NMR measurement of the polymer. In $^{29}$Si-NMR measurement, when the $SiO_{4/2}$(Q) unit is present, a peak appears near -105 to -118 ppm in the spectrum, and when the $SiO_{3/2}$(T) unit is present, a peak appears near -64 to -74 ppm or -94 to -104 ppm. When the $SiO_{2/2}$(D) unit is present, a peak appears near -13 to -25 ppm, and when the $SiO_{1/2}$(M) unit is present, a peak appears near 8.5 ppm. In the present disclosure, as the apparatus for solid NMR for verifying whether a polymer includes a siloxane moiety or not, Avance III (manufactured by Bruker) is used.

Method for measuring 50% particle diameter (D50) based on the volume distribution of fine particle specimen

The 50% particle diameter (D50) based on the volume distribution of a fine particle specimen is measured using a dynamic light scattering particle size analyzer Nanotrac UPA-EX150 (manufactured by Nikkiso Co., Ltd.). Specifically, the range is set to 0.001 to 10 μm, and measurement is performed according to the following procedure.

In order to prevent aggregation of a measurement specimen, a dispersion of the measurement specimen is added to an aqueous solution containing Family Fresh (manufactured by Kao Corporation) and stirred. After the stirring, the measurement specimen is put in the analyzer. The measurement is performed twice, and the average thereof is determined.

The measurement conditions are that the measurement time is 30 seconds, the specimen particle refractive index is 1.49, the dispersion medium is water, and the dispersion medium refractive index is 1.33.

The volume particle size distribution of a measurement specimen is measured, and the particle diameter at which the cumulative volume from the small particle diameter side in the cumulative volume distribution obtained from the measurement result is 50% is defined as the 50% particle diameter (D50) based on the volume distribution of each fine particle.

EXAMPLES

The present disclosure will now be described in detail by Examples but is not limited to these Examples. Incidentally, "parts" and "%" mean "parts by mass" and "mass%", respectively, unless specified otherwise.

In Examples, the measurement results are the results respectively measured by the measurement methods described above.

Manufacturing example of external additive 1

The following materials were put in a glass reactor equipped with a thermometer, a reflux condenser, a nitrogen gas introduction tube, and a stirrer.

Phosphate buffer solution (pH = 7.0, prepared using sodium dihydrogen phosphate dihydrate (manufactured by Kishida Chemical Co., Ltd.) and disodium hydrogen phosphate dodecahydrate (manufactured by Kishida Chemical Co., Ltd.)): 200 parts,
Sulfur atom source: sodium p-styrenesulfonate (manufactured by Kishida Chemical Co., Ltd.): 0.13 parts,
Monomer including a radical polymerizable group and a hydrolyzable group: 3-(trimethoxysilyl)propyl methacrylate (manufactured by Tokyo Chemical Industry Co., Ltd.): 11.0 parts, and
Nonhydrolyzable monomer: styrene (manufactured by Tokyo Chemical Industry Co., Ltd.): 4.7 parts.

Subsequently, the materials were heated to 65°C to 70°C and stirred for 30 minutes while ventilating nitrogen gas, and potassium peroxodisulfate (manufactured by Kishida Chemical Co., Ltd., 0.51 parts) was then added thereto as an initiator, followed by stirring for 6 hours to obtain an emulsion of particles. As acetic acid treatment, acetic acid (manufactured by Kishida Chemical Co., Ltd.) was added to the resulting emulsion of particles to adjust the pH of the emulsion to 3.0, followed by stirring at a temperature of 50°C for 3 hours. Then, as ammonia treatment, 28 mass% ammonia water (manufactured by Kishida Chemical Co., Ltd.) was added to the emulsion while maintaining the temperature of the emulsion at 50°C to adjust the pH of the emulsion to 11.0, followed by further stirring for 3 hours to hydrolyze and polycondense the hydrolyzable groups included in the particles. Subsequently, ultrafiltration was performed to remove excess solute, and concentration and filtration were repeated five times in total to obtain polymer particles. The polymer particles were subjected to $^{29}$Si-NMR measurement and thermal decomposition GC/MS, and it was confirmed that the polymer particles included a vinyl polymer moiety and a siloxane moiety. 1,1,1,3,3,3-Hexamethyldisilazane (manufactured by Kishida Chemical Co., Ltd., 27.0 parts) was added to the resulting polymer particles as a hydrophobic treatment agent, followed by stirring at a temperature of 50°C for 24 hours. Subsequently, spray drying was performed to obtain external additive 1 of which the 50% particle diameter based on the volume distribution (hereinafter, referred to as D50) was 130 nm. The physical properties of external additive 1 are shown in Table 2.

Manufacturing examples of external additives 2 to 10 and 12 to 14

External additives 2 to 10 and 12 to 14 were prepared by the same procedure as in the manufacturing example of external additive 1 except that the types and the amounts of the monomer and the sulfur atom source to be used were changed as shown in Table 1. The physical properties of external additives 2 to 10 and 12 to 14 are shown in Table 2.

Manufacturing examples of external additive 11

External additive 11 having a D50 of 71 nm was prepared as in the manufacturing example of external additive 1 except that the type and the amount of the monomer to be used were changed to as shown in Table 1 and the process of adding 28 mass% ammonia water was not performed after addition of acetic acid and stirring at 50°C for 3 hours in the acetic acid treatment. The physical properties of external additive 11 are shown in Table 2.

Manufacturing example of external additive 15

The following materials were put in a glass reactor equipped with a thermometer, a reflux condenser, a nitrogen gas introduction tube, and a stirrer.

Deionized water: 200 parts,
Sulfur atom source: sodium p-styrenesulfonate: 0.13 parts, and
Nonhydrolyzable monomer: butyl methacrylate (manufactured by Tokyo Chemical Industry Co., Ltd.): 6.3 parts and styrene: 4.7 parts.

Subsequently, the materials were heated to 65°C to 70°C and stirred for 30 minutes while ventilating nitrogen gas, and potassium peroxodisulfate (0.51 parts) was then added thereto as an initiator, followed by stirring for 6 hours to obtain an emulsion of particles. In order to remove excess solute in the resulting emulsion, ultrafiltration was performed, and concentration and filtration were repeated five times in total to obtain polymer particles. The polymer particles were subjected to $^{29}$Si-NMR measurement and thermal decomposition GC/MS, and it was confirmed that the polymer particles included a vinyl polymer moiety and did not include a siloxane moiety. The resulting polymer particles were spray-dried to obtain external additive 15. The physical properties of external additive 15 are shown in Table 2.

Manufacturing example of external additive 16

External additive 16 was prepared by the same procedure as in the manufacturing example of external additive 15 except that sodium dodecylsulfate (0.18 parts) was used instead of sodium p-styrenesulfonate. The physical properties of external additive 16 are shown in Table 2.

Manufacturing example of external additive 17

External additive 17 was prepared by the same procedure as in the manufacturing example of external additive 1 except that sodium dodecanesulfate (0.14 parts) was used instead of sodium p-styrenesulfonate and that 2,2'-azobis(2-methylpropioneamidine) dihydrochloride (V-50, manufactured by Tokyo Chemical Industry Co., Ltd., 0.51 parts) was used as the initiator instead of potassium peroxodisulfate (0.51 parts). The physical properties of external additive 17 are shown in Table 2.

Manufacturing example of external additive 18

A solution prepared by mixing the following materials was added to a solution prepared by mixing 28 mass% ammonia water (46.7 parts) and deionized water (2114 parts) at room temperature to hydrolyze and polycondense 3-(trimethoxysilyl)propyl methacrylate.

3-(Trimethoxysilyl)propyl methacrylate: 22.1 parts,
Methanol (manufactured by Kishida Chemical Co., Ltd.): 73.7 parts, and
Initiator: 2,2'-azobis(2,4-dimethylvaleronitrile) (V-65, manufactured by Tokyo Chemical Industry Co., Ltd.): 0.12 parts.

Subsequently, the reaction product was heated to 70°C to 75°C and stirred for 2 hours while ventilating nitrogen gas to perform radical polymerization. Then, ultrafiltration was performed to remove excess solute, and concentration and filtration were repeated five times in total to obtain polymer particles. The polymer particles were subjected to $^{29}$Si-NMR measurement and thermal decomposition GC/MS, and it was confirmed that the polymer particles included a vinyl polymer moiety and a siloxane moiety. The resulting polymer particles were spray-dried to obtain external additive 18. The physical properties of external additive 18 are shown in Table 2.

Table 1

| External additive Type | Monomer including radical polymerizable group and hydrolyzable group | | Nonhydrolyzable monomer | | | | Sulfur atom source | | Radical polymerization initiator | |
|---|---|---|---|---|---|---|---|---|---|---|
| | Type | Part | Type | Part | Type | Part | Type | Part | Type | Part |
| External additive 1 | MA-TMSP | 11.0 | - | - | St | 4.7 | p-StSO$_3$Na | 0.13 | KPS | 0.51 |
| External additive 2 | MA-TMSP | 22.1 | - | - | - | - | p-StSO$_3$Na | 0.13 | KPS | 0.51 |
| External additive 3 | MA-TESP | 13.0 | - | - | St | 4.7 | p-StSO$_3$Na | 0.13 | KPS | 0.51 |
| External additive 4 | MA-TESP | 25.8 | - | - | - | - | p-StSO$_3$Na | 0.13 | KPS | 0.51 |
| External additive 5 | AA-TMSP | 10.4 | - | - | St | 4.7 | p-StSO$_3$Na | 0.13 | KPS | 0.51 |
| External additive 6 | MA-TMSP | 11.0 | - | - | St | 4.7 | p-StSO$_3$Na | 0.63 | KPS | 0.51 |
| External additive 7 | MA-TMSP | 11.0 | - | - | St | 4.7 | p-StSO$_3$Na | 0.06 | KPS | 0.51 |
| External additive 8 | AA-TMSP | 20.8 | - | - | - | - | p-StSO$_3$Na | 0.06 | KPS | 0.51 |
| External additive 9 | VTMS | 13.2 | - | - | - | - | p-StSO$_3$Na | 0.06 | KPS | 0.51 |
| External additive 10 | MA-CDMSP | 9.8 | - | - | St | 4.7 | p-StSO$_3$Na | 0.13 | KPS | 0.51 |
| External additive 11 | MA-CDMSP | 9.8 | - | - | St | 4.7 | p-StSO$_3$Na | 0.13 | KPS | 0.51 |
| External additive 12 | MA-TMSP | 11.0 | - | - | St | 4.7 | Na dodecylsulfate | 0.18 | KPS | 0.51 |
| External additive 13 | MA-TMSP | 11.0 | - | - | St | 4.7 | DSS | 0.28 | KPS | 0.51 |
| External additive 14 | MA-TMSP | 11.0 | - | - | St | 4.7 | *4-VBANa | 0.43 | KPS | 0.51 |
| External additive 15 | - | - | MAB | 6.3 | St | 4.7 | p-StSO$_3$Na | 0.13 | KPS | 0.51 |

(continued)

| External additive Type | Monomer including radical polymerizable group and hydrolyzable group | | Nonhydrolyzable monomer | | | | Sulfur atom source | | Radical polymerization initiator | |
|---|---|---|---|---|---|---|---|---|---|---|
| | Type | Part | Type | Part | Type | Part | Type | Part | Type | Part |
| External additive 16 | - | - | MAB | 6.3 | St | 4.7 | Na dodecylsulfate | 0.18 | KPS | 0.51 |
| External additive 17 | MA-TMSP | 11.0 | - | - | St | 4.7 | Na dodecanesulfate | 0.14 | V-50 | 0.51 |
| External additive 18 | MA-TMSP | 22.1 | - | - | - | - | - | - | V-65 | 0.12 |

Abbreviations in Table 1 are as follows.
MA-TMSP: 3-(trimethoxysilyl)propyl methacrylate
MA-TESP: 3-(triethoxysilyl)propyl methacrylate
AA-TMSP: 3-(trimethoxysilyl)propyl acrylate
VTMS: vinyltrimethoxysilane
MA-CDMSP: 3-(chlorodimethylsilyl)propyl methacrylate
MAB: butyl methacrylate
St: styrene
DSS: sodium bis(2-ethylhexyl)sulfosuccinate
4-VBANa: sodium 4-vinylbenzoate
KPS: potassium peroxodisulfate
V-50: 2,2'-azobis(2-methylpropionamidine)dihydrochloride
V-65: 2,2'-azobis(2,4-dimethylvaleronitrile)
*4-VBANa does not include a sulfur atom but is stated in the column of sulfur atom source.

Table 2

| | Sulfur atom on external additive particle surface | S/(C+O+Si+S) | Si/(C+O+Si) | C/Si | D50 | Presence or absence of vinyl polymer moiety in polymer particle | Presence or absence of siloxane moiety in polymer particle |
|---|---|---|---|---|---|---|---|
| External additive 1 | Present | 0.16% | 5.1% | 15.0 | 130 nm | Present | Present |
| External additive 2 | Present | 0.17% | 8.7% | 7.0 | 125 nm | Present | Present |
| External additive 3 | Present | 0.16% | 5.1% | 15.0 | 145 nm | Present | Present |
| External additive 4 | Present | 0.12% | 8.7% | 7.0 | 122 nm | Present | Present |
| External additive 5 | Present | 0.18% | 5.4% | 14.0 | 89 nm | Present | Present |

(continued)

| | Sulfur atom on external additive particle surface | S/(C+O+Si+S) | Si/(C+O+Si) | C/Si | D50 | Presence or absence of vinyl polymer moiety in polymer particle | Presence or absence of siloxane moiety in polymer particle |
|---|---|---|---|---|---|---|---|
| External additive 6 | Present | 0.15% | 5.1% | 15.0 | 48 nm | Present | Present |
| External additive 7 | Present | 0.13% | 5.1% | 15.0 | 210 nm | Present | Present |
| External additive 8 | Present | 0.16% | 9.5% | 6.0 | 206 nm | Present | Present |
| External additive 9 | Present | 0.15% | 22.2% | 2.0 | 217 nm | Present | Present |
| External additive 10 | Present | 0.15% | 4.9% | 17.0 | 73 nm | Present | Present |
| External additive 11 | Present | 0.12% | 4.9% | 17.0 | 71 nm | Present | Present |
| External additive 12 | Present | 0.07% | 5.1% | 15.0 | 70 nm | Present | Present |
| External additive 13 | Present | 0.06% | 5.1% | 15.0 | 68 nm | Present | Present |
| External additive 14 | Present | 0.15% | 5.1% | 15.0 | 152 nm | Present | Present |
| External additive 15 | Present | 0.16% | - | - | 110 nm | Present | Absent |
| External additive 16 | Present | 0.05% | - | - | 86 nm | Present | Absent |
| External additive 17 | Absent | - | 5.1% | 15.0 | 120 nm | Present | Present |
| External additive 18 | Absent | - | 8.7% | 7.0 | 120 nm | Present | Present |

In Table 2, S/(C+O+Si+S) is the proportion of the number of sulfur atoms to the sum of the numbers of carbon atoms, oxygen atoms, silicon atoms, and sulfur atoms in the surface of external additive particles. Si/(C+O+Si) is the proportion of the number of silicon atoms to the sum of the numbers of carbon atoms, oxygen atoms, and silicon atoms in external additive particles, and C/Si is the ratio of the number of carbon atoms to the number of silicon atoms in external additive particles. The present inventors presume that the sulfur atom sources used in the manufacturing examples of external additives 12, 13, and 16 do not bind to the polymers in external additive particles and are therefore washed away

from the surface of external additive particles during the process of ultrafiltration. However, the present inventors infer that since $-OSO_3K$ or $-OSO_3H$ is introduced into the polymer in the external additive particle by the potassium peroxodisulfate used as the polymerization initiator, sulfur atoms are detected in the surface of external additive particles.

Manufacturing example of toner particle 1

The materials shown below were premixed with a Henschel mixer, and the mixture was then melted and kneaded with a twin-screw extruder (trade name: PCM-30, manufactured by Ikegai Corp.) set to a temperature such that the temperature of the molten material at the discharge port was 150°C to obtain a kneaded product.

Amorphous polyester (propylene oxide adduct of bisphenol A/terephthalic acid = 50/50, number average molecular weight: 3000, acid value: 12): 100 parts,

Magnetic iron oxide particle: 75 parts,
Fischer-Tropsch wax (C105, manufactured by Sasol, melting point: 105°C): 2 parts, and
Charge control agent (T-77, manufactured by Hodogaya Chemical Co., Ltd.): 2 parts. The resulting kneaded product was cooled and was roughly pulverized with a hammermill and was then finely pulverized with a pulverizer (trade name: Turbomill T250, manufactured by Freund-Turbo Corporation) to obtain a finely pulverized powder. The resulting finely pulverized powder was classified using a multi-division classifier using a Coanda effect to obtain toner particle 1 having a weight average particle diameter of 7.2 μm.

Manufacturing example of toner 1

External addition of an external additive to toner particle 1 was performed by a dry process. Toner particle 1 (100 parts), external additive 1 (3 parts), and fumed silica (1.5 parts, BET specific surface area: 200 $m^2/g$) were put in a Henschel mixer and were subjected to external addition and mixing. Subsequently, sieving with an aperture of 150 μm was performed to obtain a toner 1 in which external additive 1 was externally added to toner particle 1.

Manufacturing examples of toners 2 to 18

Toners 2 to 18 were prepared as in the manufacturing example of toner 1 except that the external additive externally added to toner particle 1 was changed to external additives 2 to 18, respectively.

Example 1

The following evaluations were performed using toner 1.

Evaluation of flowability of toner

The flowability of a toner was measured by the following method. First, 3 g of toner 1 was sieved with sieves having apertures of 150 μm, 100 μm, and 45 μm (plain-woven wire mesh, Standard JIS Z8801-1) using a powder tester (PT-X, manufactured by Hosokawa Micron Corporation) while vibrating under the condition of a strength of 4.0 for 10 seconds. The flowability of the toner was evaluated using the flowability index (%) shown by the following expression using the amount A of the toner remaining on the sieve with an aperture of 150 μm, the amount B of the toner remaining on the sieve with an aperture of 100 μm, and the amount C of the toner remaining of the sieve with an aperture of 45 μm. The evaluation results are shown in Table 3. In the evaluation, a smaller value of the flowability index indicates superior flowability of the toner.

$$\text{Flowability index (\%)} = [(A + 0.6 \times B + 0.2 \times C)/(\text{mass of measured specimen})] \times 100.$$

Evaluation of flowability retention of toner

The flowability retention of a toner was evaluated after the above-described evaluation. The image forming apparatus used was HP LaserJet Enterprise M609dn (manufactured by HP Development Company, L.P.). Toner 1 was put in the cartridge, and 5000 sheets of an image were output under the following conditions.

Paper: GFC-081 (81.0 $g/m^2$) (manufactured by Canon Marketing Japan Inc.),
Amount of toner on paper: 0.35 $mg/cm^2$, and

Process speed: 377 mm/sec.

Subsequently, the residual toner in the cartridge was taken out, the flowability index of the residual toner was calculated, and the value was used as the flowability index after endurance. The flowability index obtained in the evaluation of the flowability of a toner was used as the flowability index before endurance, the variation rate shown by the following expression was calculated, and the flowability retention of the toner was evaluated using the variation rate.

Variation rate (%) = [(flowability index after endurance) - (flowability index before endurance)]/(flowability index before endurance) $\times$ 100.

When the variation rate was 100% or less, it was judged that the effects of the present disclosure were obtained.

Evaluation of crushing of external additive particle and detachment from toner particle

Crushing of external additive particles and detachment from toner particles were evaluated after the evaluation of the flowability retention of a toner.

Toner 1 remaining in the cartridge after the image output of 5000 sheets was taken out, and the surface of the taken out toner 1 was observed with a scanning electron microscope (S-4800, manufactured by Hitachi High-Tech Corporation) to obtain an SEM photographic image. In the obtained photographic image, when a disrupted substance adhered to the toner surface was observed, it was judged that there was crushing, and when a depression due to detachment of the external additive particle was observed on the toner surface, it was judged that there was detachment.

Examples 2 to 14 and Comparative Examples 1 to 4

Evaluations as in Example 1 were perfumed using toners 2 to 18. The evaluation results are shown in Table 3.

Table 3

| | | Flowability index | | | SEM observation | |
|---|---|---|---|---|---|---|
| | | Before endurance | After endurance | Variation rate | Crushing | Detachment |
| Example 1 | Toner 1 | 9% | 10% | 11% | No | No |
| Example 2 | Toner 2 | 12% | 14% | 17% | No | No |
| Example 3 | Toner 3 | 13% | 15% | 15% | No | No |
| Example 4 | Toner 4 | 13% | 15% | 15% | No | No |
| Example 5 | Toner 5 | 11% | 13% | 18% | No | No |
| Example 6 | Toner 6 | 13% | 20% | 54% | No | No |
| Example 7 | Toner 7 | 9% | 15% | 67% | No | No |
| Example 8 | Toner 8 | 10% | 19% | 90% | No | No |
| Example 9 | Toner 9 | 16% | 32% | 100% | No | No |
| Example 10 | Toner 10 | 14% | 21% | 50% | No | No |
| Example 11 | Toner 11 | 17% | 29% | 71% | No | No |
| Example 12 | Toner 12 | 11% | 13% | 18% | No | No |
| Example 13 | Toner 13 | 10% | 11% | 10% | No | No |
| Example 14 | Toner 14 | 11% | 13% | 18% | No | No |
| Comparative Example 1 | Toner 15 | 45% | 93% | 107% | Yes | No |
| Comparative Example 2 | Toner 16 | 46% | 98% | 113% | Yes | No |
| Comparative Example 3 | Toner 17 | 36% | 94% | 161% | No | Yes |
| Comparative Example 4 | Toner 18 | 36% | 94% | 161% | No | Yes |

While the present disclosure has been described with reference to exemplary embodiments, it is to be understood that the invention is not limited to the disclosed exemplary embodiments.

## Claims

1. An external additive particle for a toner comprising a sulfur-containing polymer, wherein

   the polymer includes a vinyl polymer moiety and a siloxane moiety,
   a proportion of the number of silicon atoms to the sum of the number of carbon atoms, the number of oxygen atoms, and the number of silicon atoms in the external additive particle, as determined according to the description, is 4.0% or more and 25.0% or less, and
   a sulfur atom is contained in a surface of the external additive particle as detected by X-ray photoelectron spectroscopy according to the description.

2. The external additive particle according to Claim 1, wherein
   a proportion of the number of sulfur atoms to the sum of the number of carbon atoms, the number of oxygen atoms, the number of silicon atoms, and the number of sulfur atoms in the surface of the external additive particle as measured by X-ray photoelectron spectroscopy according to the description is 0.10% to 0.50%.

3. The external additive particle according to Claim 1 or 2, wherein
   the proportion of the number of silicon atoms to the sum of the number of carbon atoms, the number of oxygen atoms, and the number of silicon atoms is 4.0% to 10.0%.

4. The external additive particle according to any one of Claims 1 to 3, wherein
   the polymer contains a monomer unit represented by a following Formula (1):

R'
CH2
C
C
O
O
R1
SiO3/2
(1)

   wherein, $R^1$ is an alkylene group having 1 to 10 carbon atoms, and R' is a hydrogen atom or a methyl group.

5. The external additive particle according to any one of Claims 1 to 4, wherein
   a ratio of the number of carbon atoms in the external additive particle to the number of silicon atoms in the external additive particle, as determined according to the description, is 6.5 or more.

6. The external additive particle according to any one of Claims 1 to 5, wherein

D50 of the external additive particle is 50 nm to 200 nm, where D50 is a 50% particle diameter based on volume distribution as determined according to the description.

**7.** The external additive particle according to any one of Claims 1 to 6, wherein the polymer includes at least one functional group selected from the group consisting of $-SO_3H$, $-SO_3Na$, $-SO_3K$, $-OSO_3H$, $-OSO_3Na$, and $-OSO_3K$.

**8.** The external additive particle according to any one of Claims 1 to 7, wherein the polymer includes a monomer unit represented by a following Formula (S):

CH2-CH
(S)
RS1
RS2
RS3
RS4
SO3X

wherein, $R^{S1}$ to $R^{S4}$ are each independently a hydrogen atom or a methyl group, and X is a hydrogen atom or an alkali metal atom.

**9.** The external additive particle according to any one of Claims 1 to 8, wherein the polymer is a polymer in which vinyl polymer chains are cross-linked by a siloxane bond.

**10.** A toner comprising a toner particle and the external additive according to claim 1 on a surface of the toner particle.

**11.** A method for manufacturing an external additive particle for a toner according to any one of claims 1 to 9, comprising a step (i-1) and a step (ii) or comprising a step (i-2) and a step (ii):

(i-1) a step of obtaining a polymerized compound having a hydrolyzable group by performing a radical polymerization reaction of monomer material containing a radical polymerizable sulfonate and a compound represented by a following Formula (2),
(i-2) a step of obtaining a polymerized compound having a hydrolyzable group by performing a radical polymerization reaction of monomer material containing a compound represented by a following Formula (2), with persulfate as a radical polymerization initiator,

Formula (2): $R^5_m SiX_{4-m}$

wherein, X is a hydrolyzable group,
m is an integer of 1 to 3,
when m is 1, $R^5$ is a radical polymerizable group having 1 to 20 carbon atoms, and
when m is 2 or 3, at least one of $R^5$s is a radical polymerizable group having 1 to 20 carbon atoms and all the others of $R^5$s which are not radical polymerizable group are each independently an alkyl group having 1 to 20 carbon atoms;

(ii) a step of obtaining the polymer by performing a hydrolysis reaction and a polycondensation reaction of the hydrolyzable group in the polymerized compound obtained in the step (i-1) or the step (i-2).

**12.** The method for manufacturing an external additive particle according to Claim 11, wherein

in the step (i-1) or the step (i-2), the radical polymerization reaction is under a condition of $6.0 \leq pH \leq 8.0$, and the step (ii) includes a step A of performing a reaction under a condition of $2.0 \leq pH \leq 4.0$, and a step B of performing a reaction under a condition of $10.0 \leq pH \leq 12.0$ after the step A.

**13.** The method for manufacturing an external additive particle according to Claims 11 or 12, wherein the hydrolyzable group is an alkoxy group.

**14.** The method for manufacturing an external additive particle according to any one of Claims 11 to 13, wherein the radical polymerizable group in the Formula (2) is an acryloxyalkyl group or a methacryloxyalkyl group.

**Patentansprüche**

**1.** Externes Additivteilchen für einen Toner, das ein schwefelhaltiges Polymer umfasst, wobei

das Polymer einen Vinylpolymeranteil und einen Siloxananteil beinhaltet,
ein Anteil der Anzahl an Siliciumatomen zur Summe der Anzahl der Kohlenstoffatome, der Anzahl der Sauerstoffatome und der Anzahl der Siliciumatome in dem externen Additivteilchen, wie gemäß der Beschreibung bestimmt, 4,0 % oder mehr und 25,0 % oder weniger beträgt, und
ein Schwefelatom in einer Oberfläche des externen Additivteilchens, wie durch Röntgen-Photoelektronenspektroskopie gemäß der Beschreibung detektiert, enthalten ist.

**2.** Externes Additivteilchen nach Anspruch 1, wobei ein Anteil der Anzahl an Schwefelatomen zur Summe der Anzahl der Kohlenstoffatome, der Anzahl der Sauerstoffatome, der Anzahl der Siliciumatome und der Anzahl der Schwefelatome in der Oberfläche des externen Additivteilchens, wie durch Röntgen-Photoelektronenspektroskopie gemäß der Beschreibung gemessen, 0,10 % bis 0,50 % beträgt.

**3.** Externes Additivteilchen nach Anspruch 1 oder 2, wobei der Anteil der Anzahl der Siliciumatome zur Summe der Anzahl der Kohlenstoffatome, der Anzahl der Sauerstoffatome und der Anzahl der Siliciumatome 4,0 % bis 10,0 % beträgt.

**4.** Externes Additivteilchen nach einem der Ansprüche 1 bis 3, wobei das Polymer eine durch die folgende Formel (1) dargestellte Monomereinheit enthält:

R'
CH2
C
C
O
O
R1
SiO3/2
· · · (1)

wobei $R^1$ eine Alkylengruppe mit 1 bis 10 Kohlenstoffatomen ist und R' ein Wasserstoffatom oder eine Methylgruppe

ist.

**5.** Externes Additivteilchen nach einem der Ansprüche 1 bis 4, wobei ein Verhältnis der Anzahl der Kohlenstoffatome im externen Additivteilchen zur Anzahl der Siliciumatome im externen Additivteilchen, wie gemäß der Beschreibung bestimmt, 6,5 oder mehr beträgt.

**6.** Externes Additivteilchen nach einem der Ansprüche 1 bis 5, wobei D50 des externen Additivteilchens 50 nm bis 200 nm beträgt, wobei D50 ein 50 %-Teilchendurchmesser basiert auf der Volumenverteilung ist, wie gemäß der Beschreibung bestimmt.

**7.** Externes Additivteilchen nach einem der Ansprüche 1 bis 6, wobei das Polymer mindestens eine funktionelle Gruppe ausgewählt aus der Gruppe bestehend aus $-SO_3H$, $-SO_3Na$, $-SO_3K$, $-OSO_3H$, $-OSO_3Na$ und $-OSO_3K$ beinhaltet.

**8.** Externes Additivteilchen nach einem der Ansprüche 1 bis 7, wobei das Polymer eine durch die folgende Formel (S) dargestellte Monomereinheit beinhaltet:

CH2-CH
(S)
RS1
RS2
RS3
RS4
SO3X


wobei $R^{S1}$ bis $R^{S4}$ jeweils unabhängig voneinander ein Wasserstoffatom oder eine Methylgruppe sind und X ein Wasserstoffatom oder ein Alkalimetallatom ist.

**9.** Externes Additivteilchen nach einem der Ansprüche 1 bis 8, wobei das Polymer ein Polymer ist, in dem Vinylpolymerketten durch eine Siloxanbindung vernetzt sind.

**10.** Toner, der ein Tonerteilchen und das externe Additiv nach Anspruch 1 auf einer Oberfläche des Tonerteilchens umfasst.

**11.** Verfahren zur Herstellung eines externen Additivteilchens für einen Toner nach einem der Ansprüche 1 bis 9, umfassend einen Schritt (i-1) und einen Schritt (ii) oder umfassend einen Schritt (i-2) und einen Schritt (ii):

(i-1) einen Schritt zum Erhalten einer polymerisierten Verbindung mit einer hydrolysierbaren Gruppe durch Durchführen einer radikalischen Polymerisationsreaktion von Monomermaterial, das ein radikalisch polymerisierbares Sulfonat und eine durch eine folgende Formel (2) dargestellte Verbindung enthält,
(i-2) einen Schritt zum Erhalten einer polymerisierten Verbindung mit einer hydrolysierbaren Gruppe durch Durchführen einer radikalischen Polymerisationsreaktion von Monomermaterial, das eine durch eine folgende Formel (2) dargestellte Verbindung enthält, mit Persulfat als radikalischem Polymerisationsinitiator,

Formel (2): $R^5_mSiX_{4-m}$

wobei X eine hydrolysierbare Gruppe ist,
m eine ganze Zahl von 1 bis 3 ist,
wenn m 1 ist, $R^5$ eine radikalisch polymerisierbare Gruppe mit 1 bis 20 Kohlenstoffatomen ist, und

wenn m 2 oder 3 ist, mindestens eines der $R^5$ eine radikalisch polymerisierbare Gruppe mit 1 bis 20 Kohlenstoffatomen ist und alle anderen $R^5$, die keine radikalisch polymerisierbaren Gruppen sind, jeweils unabhängig voneinander eine Alkylgruppe mit 1 bis 20 Kohlenstoffatomen sind;

(ii) einen Schritt zum Erhalten des Polymers durch Durchführen einer Hydrolysereaktion und einer Polykondensationsreaktion der hydrolysierbaren Gruppe in der in dem Schritt (i-1) oder dem Schritt (i-2) erhaltenen polymerisierten Verbindung.

**12.** Verfahren zur Herstellung eines externen Additivteilchens nach Anspruch 11, wobei

in dem Schritt (i-1) oder dem Schritt (i-2) die radikalische Polymerisationsreaktion unter einer Bedingung von $6{,}0 \leq pH \leq 8{,}0$ stattfindet, und
der Schritt (ii) einen Schritt A zum Durchführen einer Reaktion unter einer Bedingung von $2{,}0 \leq pH \leq 4{,}0$ und einen Schritt B zum Durchführen einer Reaktion unter einer Bedingung von $10{,}0 \leq pH \leq 12{,}0$ nach dem Schritt A beinhaltet.

**13.** Verfahren zur Herstellung eines externen Additivteilchens nach Anspruch 11 oder 12, wobei die hydrolysierbare Gruppe eine Alkoxygruppe ist.

**14.** Verfahren zur Herstellung eines externen Additivteilchens nach einem der Ansprüche 11 bis 13, wobei die radikalisch polymerisierbare Gruppe in der Formel (2) eine Acryloxyalkylgruppe oder eine Methacryloxyalkylgruppe ist.

## Revendications

**1.** Particule d’additif externe pour un toner comprenant un polymère contenant du soufre, dans laquelle le polymère inclut une fraction polymère vinylique et une fraction siloxane,

une proportion du nombre d’atomes de silicium par rapport à la somme du nombre d’atomes de carbone, du nombre d’atomes d’oxygène et du nombre d’atomes de silicium dans la particule d’additif externe, telle qu’elle est déterminée selon la description, est de 4,0 % ou plus et de 25,0 % ou moins, et
un atome de soufre est contenu dans une surface de la particule d’additif externe telle qu’elle est détectée par spectroscopie photoélectronique à rayons X selon la description.

**2.** Particule d’additif externe selon la revendication 1, dans laquelle une proportion du nombre d’atomes de soufre par rapport à la somme du nombre d’atomes de carbone, du nombre d’atomes d’oxygène, du nombre d’atomes de silicium et du nombre d’atomes de soufre à la surface de la particule d’additif externe telle qu’elle est mesurée par spectroscopie photoélectronique à rayons X selon la description est de 0,10 % à 0,50 %.

**3.** Particule d’additif externe selon la revendication 1 ou 2, dans laquelle la proportion du nombre d’atomes de silicium par rapport à la somme du nombre d’atomes de carbone, du nombre d’atomes d’oxygène et du nombre d’atomes de silicium est de 4,0 % à 10,0 %.

**4.** Particule d’additif externe selon l’une quelconque des revendications 1 à 3, dans laquelle

le polymère contient un motif monomère représenté par une formule (1) suivante :

$$-\!\left[CH_2-\underset{\substack{|\\ C=O\\ |\\ O\\ |\\ R^1\\ |\\ SiO_{3/2}}}{\overset{\substack{R'\\ |}}{C}}\right]\!- \quad \cdots \quad (1)$$

dans laquelle, $R^1$ est un groupe alkylène ayant 1 à 10 atomes de carbone, et R' est un atome d'hydrogène ou un groupe méthyle.

5. Particule d'additif externe selon l'une quelconque des revendications 1 à 4, dans laquelle un rapport entre le nombre d'atomes de carbone dans la particule d'additif externe et le nombre d'atomes de silicium dans la particule d'additif externe, tel qu'il est déterminé selon la description, est de 6,5 ou plus.

6. Particule d'additif externe selon l'une quelconque des revendications 1 à 5, dans laquelle le D50 de la particule d'additif externe est de 50 nm à 200 nm, où le D50 est un diamètre de particule de 50 % sur la base de la distribution volumique telle qu'elle est déterminée selon la description.

7. Particule d'additif externe selon l'une quelconque des revendications 1 à 6, dans laquelle le polymère inclut au moins un groupe fonctionnel choisi dans le groupe constitué de $-SO_3H$, $-SO_3Na$, $-SO_3K$, $-OSO_3H$, $-OSO_3Na$ et $-OSO_3K$.

8. Particule d'additif externe selon l'une quelconque des revendications 1 à 7, dans laquelle

le polymère inclut un motif monomère représenté par une Formule (S) suivante :

CH2-CH
(S)
RS1
RS4
RS2
RS3
SO3X

dans laquelle, $R^{S1}$ à $R^{S4}$ sont chacun indépendamment un atome d'hydrogène ou un groupe méthyle, et X est un atome d'hydrogène ou un atome de métal alcalin.

9. Particule d'additif externe selon l'une quelconque des revendications 1 à 8, dans laquelle le polymère est un polymère dans lequel des chaînes de polymère vinylique sont réticulées par une liaison siloxane.

10. Toner comprenant une particule de toner et l'additif externe selon la revendication 1 sur une surface de la particule de toner.

**11.** Procédé de fabrication d'une particule d'additif externe pour toner selon l'une quelconque des revendications 1 à 9, comprenant une étape (i-1) et une étape (ii) ou comprenant une étape (i-2) et une étape (ii) :

(i-1) une étape d'obtention d'un composé polymérisé ayant un groupe hydrolysable en réalisant une réaction de polymérisation radicalaire d'un matériau monomère contenant un sulfonate polymérisable radicalaire et un composé représenté par une formule (2) suivante,
(i-2) une étape d'obtention d'un composé polymérisé ayant un groupe hydrolysable en réalisant une réaction de polymérisation radicalaire d'un matériau monomère contenant un composé représenté par une formule (2) suivante, avec du persulfate comme initiateur de polymérisation radicalaire,

Formule (2) : $R^5mSiX_{4-m}$

dans laquelle X est un groupe hydrolysable,
m est un entier de 1 à 3,
lorsque m est 1, $R^5$ est un groupe polymérisable radicalaire ayant 1 à 20 atomes de carbone, et
lorsque m est 2 ou 3, au moins l'un de $R^5$ est un groupe polymérisable radicalaire ayant 1 à 20 atomes de carbone et tous les autres de $R^5$ qui ne sont pas un groupe polymérisable radicalaire sont chacun indépendamment un groupe alkyle ayant 1 à 20 atomes de carbone ;
(ii) une étape d'obtention du polymère en réalisant une réaction d'hydrolyse et une réaction de polycondensation du groupe hydrolysable dans le composé polymérisé obtenu à l'étape (i-1) ou à l'étape (i-2).

**12.** Procédé de fabrication d'une particule additive externe selon la revendication 11, dans lequel

dans l'étape (i-1) ou l'étape (i-2), la réaction de polymérisation radicalaire est dans une condition de $6,0 \leq pH \leq 8,0$, et
l'étape (ii) inclut une étape A de réalisation d'une réaction dans une condition de $2,0 \leq pH \leq 4,0$, et une étape B de réalisation d'une réaction dans une condition de $10,0 \leq pH \leq 12,0$ après l'étape A.

**13.** Procédé de fabrication d'une particule d'additif externe selon les revendications 11 ou 12, dans lequel le groupe hydrolysable est un groupe alcoxy.

**14.** Procédé de fabrication d'une particule additive externe selon l'une quelconque des revendications 11 à 13, dans lequel
le groupe polymérisable radicalaire dans la formule (2) est un groupe acryloxyalkyle ou un groupe méthacryloxyalkyle.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 8202071 A
- WO 2016026464 A1
- KR 20130125479 A
- JP H09197706 A